# EUROPÄISCHE PATENTSCHRIFT

(11) **EP 1 334 848 B1**
(45) Veröffentlichungstag und Bekanntmachung des Hinweises auf die Patenterteilung: **09.08.2006**
(21) Anmeldenummer: 03000943.5
(22) Anmeldetag: 16.01.2003
(51) Int. Cl.: B60G 9/00, B60G 21/05

(54) **Fahrzeugachsenelement mit Tragarm und damit verbundenem Achsrohr**
Vehicle axle element with bearing arm and axle tube connected therewith
Elément d'essieu de véhicule avec bras portant et tube d'essieu connecté avec ce bras

(30) Priorität: 17.01.2002 NL 1019766
(43) Veröffentlichungstag der Anmeldung: 13.08.2003
(73) Patentinhaber: Schmitz Cargobull AG, 48341 Altenberge (DE)
(72) Erfinder: Schmitz, Peter, 48341 Altenberge (DE)
(74) Vertreter: Hoffmeister, Helmut

(56) Entgegenhaltungen:
- EP-A- 0 590 528
- EP-A- 0 830 957
- EP-A- 1 155 883
- DE-A- 19 946 802
- DE-U- 29 615 286
- US-A- 1 379 798
- US-A- 1 872 196
- US-A- 1 906 290
- US-A- 2 129 656
- US-A- 2 587 522
- US-A- 2 929 617
- US-A- 4 643 406

## Beschreibung

Die Erfindung betrifft ein Fahrzeugachsenelement mit einem Achskörper eines Fahrzeugs und einem den Achskörper kreuzenden und mit diesem verbundenen Tragarm, umfassend ein zwischen dem Achskörper und dem Tragarm angeordnetes Stützteil mit einer Aussparung, in die ein Teil des Achskörpers aufgenommen ist, und weiter umfassend Klemmmittel, mit denen das Stützteil und das in dieses aufgenommene Teil des Achskörpers an dem Tragarm befestigt sind, wobei der Achskörper in montiertem Zustand infolge einer von den Klemmmitteln gelieferten Klemmkraft an das Stützteil gepresst ist, wobei der Achskörper mit einer Vertiefung und das Stützteil in seiner Aussparung mit einem ersten Vorsprung versehen ist, der in montiertem Zustand mindestens teilweise in der Vertiefung des Achskörpers aufgenommen ist.

Die Klemmmittel werden angezogen, so dass sich das Stützteil und/oder das in dieses aufgenommene Teil des Achskörpers fest aneinander anlegen. Namentlich bei runden Achskörpern ist es notwendig, den Achskörper gegen eine unerwünschte Rotation um dessen Mittelachse, die während der Benutzung des Fahrzeugs durch Verdrehungskräfte auftreten kann, zu sichern. Die von den Klemmmitteln ausgeübte Klemmkraft allein reicht dazu nicht aus. Zwar ist bekannt, den Achskörper gegenüber dem Achsverbindungsgang mittels eines Sicherungsstifts zu sichern, wozu ein Loch in dem Achskörper notwendig ist. Wenn die Achse mit einem Loch versehen ist, hat dies den Nachteil, dass die Achse geschwächt ist.

Ein Fahrzeugachsenelement, wie eingangs genannt, ist vom Prinzip bekannt aus US 1 872 196 (URSCHEL). Der Achskörper ist an den Stellen des Kontaktes mit dem Stützteil abgeflacht; das Stützteil selbst ist in sich stark vor formt. Die hierzu erforderlichen Verformungsschritte verursachen einen relativ hohen Aufwand, schon allein an Werkzeugkosten, der vermieden werden sollte. Durch Abflachung des Stützteils wird der Wirkungsquerschnitt des Achskörpers erniedrigt.

Weiterhin ist bekannt (vergleiche DE 296 15 286 Ul) bei einem Fahrzeugachsenelement den Achskörper, der mit einem Tragarm verbunden ist, in Abstützungsbereichen des Achskörpers aus einem unrunden Profitabschnitt zu bilden.

Es ist außerdem bekannt (US 2 929 617), einen Tragarm gegenüber einem Achsrohr festzulegen, indem eine kalottenförmige Vertiefung sowohl im Tragarm als auch in das Achsrohr eingebracht wird, in die eine Stahlkugel eingelegt wird, die mit ihrer oberen und unteren Hemisphäre eine Rotationsbewegung zwischen Tragarm und Achsrohr bei deren Verklemmung verhindert. Ein Stützteil ist jedoch nicht vorgesehen.

Der Erfindung liegt die Aufgabe zugrunde, ein Fahrzeugachsenelement, bestehend aus Achskörper und Tragarm, zu schaffen, bei dem die Verbindung zwischen Fahrzeugachse und Tragarm zumindest dem Standard, gemessen an der US 1 872 196, entspricht, jedoch einfach herzustellen ist, ohne den Wirkungsquerschnitt des Achsrohres wesentlich zu vermindern.

Diese Aufgabe wird gelöst durch ein Fahrzeugachsenelement der eingangs genannten Art, bei dem das Stützteil an der dem Tragarm zugewandten Seite mit einem zweiten Vorsprung versehen ist, der in montiertem Zustand mindestens teilweise in die Aussparung im Tragarm aufgenommen ist.

Der Vorsprung, der während der Benutzung in die Vertiefung aufgenommen ist, sorgt dafür, dass der Achskörper gegen Rotation gesichert ist.

Die Vertiefung kann mittels plastischer Verformung eingeformt werden. Die Vertiefung ist damit so geformt, dass kein Material weggenommen worden ist, so dass der Achskörper nicht geschwächt ist. Eine spanabhebende Formung scheint daher weniger geeignet zur Einbringung der Vertiefung.

Die Vertiefung in dem Achskörper kann mittels eines Verfahrens vorgenommen werden, bei dem der Achskörper lokal erhitzt wird; ein Presskörper wird in den Achskörper von außen eingepresst, wobei der Presskörper eine Form hat, die im wesentlichen der Form des ersten Vorsprungs entspricht.

Das lokale Erhitzen des Achskörpers ermöglicht eine plastische Verformung in begrenzten Bereichen. Die Erhitzungstemperatur, die für die plastische Verformung benötigt wird, ist jedoch erheblich niedriger als die bei einem eventuellen Schweißen auftretenden Temperaturen. Die Strukturänderung in dem Achsmaterial ist bei diesem Verfahren also erheblich geringer als bei einem Schweißen, was der Festigkeit der Achse zugute kommt.

Wenn der Achskörper nur lokal erhitzt wird, hat es den weiteren Vorteil, dass die Achse sich auch nur unwesentlich verformen wird.

Die Erfindung wird nachfolgend anhand der Zeichnung erläutert. Es zeigen:
- Figur 1: einen abgebrochenen Schnitt durch eine Ausbildung einer Verbindung in seitlicher Ansicht;
- Figur 2: eine Ansicht in Achsenrichtung der in Figur 1 gezeigten Ausführungsform;
- Figur 3: eine seitliche Ansicht einer weiteren Ausbildung einer erfindungsgemäßen Vorrichtung;
- Figur 4: eine Darstellung von Achsrohr und ein Stützteil.

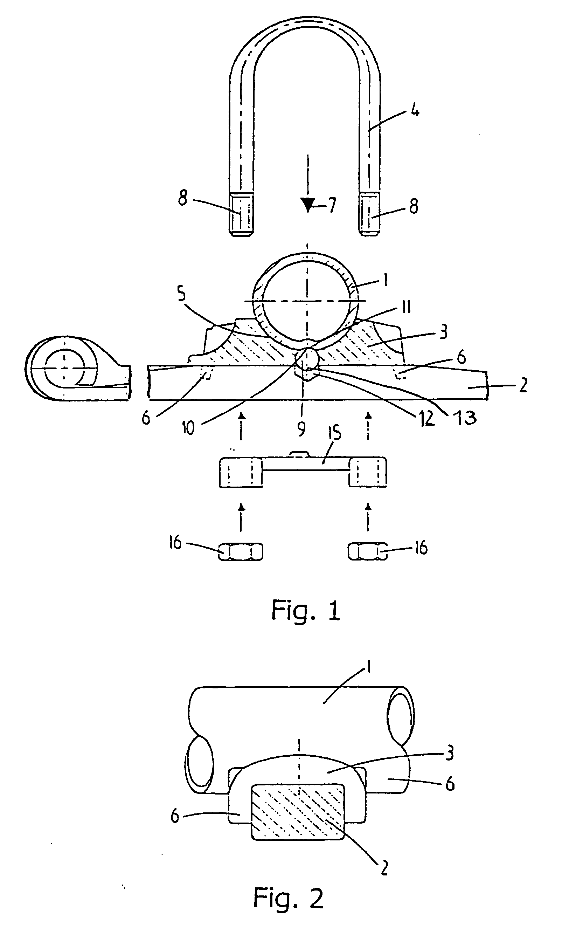

In den Figuren 1 und 2 ist ein Achskörper 1 eines Fahrzeugs und ein sich in Längsrichtung des Fahrzeugs erstreckender und den Achskörper 1 im wesentlichen senkrecht kreuzender Tragarm 2 dargestellt, die miteinander verbunden sind. Der Achskörper 1 ist als ein im wesentlichen rundes Rohr ausgeführt. Dort, wo der Tragarm 2 den Achskörper 1 kreuzt, ist der Tragarm 2 im Wesentlichen gerade und nach oben abgeflacht.

Die Verbindung zwischen Tragarm 2 und Achskörper 1 umfasst weiterhin ein Stützteil 3 und Briden 4. Das Stützteil 3 hat die Form eines auf seiner Unterseite flachen Blocks mit einer auf der Oberseite vorhandenen Aussparung 5. Das Stützteil 3 ist auf der Oberseite des Tragarms 2 positioniert. Die Aussparung 5 an der vom Tragarm 2 abgekehrten Seite nimmt einen Teil des Achskörpers 1 auf und ist kompatibel ausgeführt. Das Stützteil 3 ist mit zapfenartigen Vorsprüngen 6 versehen, die beidseitig des Tragarms unter die Oberseite ragen. Diese Vorsprüngen 6 sorgen dafür, dass das Stützteil 3 sich nicht gegenüber dem Tragarm 2 in Querrichtung des Tragarms relativ hierzu verschieben kann.

Zwei Briden 4 werden um den Achskörper 1 in Richtung des Pfeils 7 positioniert. Die Schenkel der Briden 4 werden durch Bohrungen (nicht dargestellt) im Stützteil 3 und seitlich zum Tragarm 2 gesteckt. Als Gegenlager ist unter dem Tragarm 2 eine Klemmplatte 15 angeordnet, die ebenfalls mit Bohrungen versehen ist. Die Schenkel der Briden 4 sind jeweils an ihrem Ende mit einem Gewindeteil 8 versehen, das mit einem Gewinde versehenen Muttern 16 verschraubt wird, so dass die Verwendung angezogen und festgelegt werden kann. Wenn die Muttern 16 angezogen sind, ist der Achskörper 1 formschlüssig in den Aussparungen aufgenommen.

Das Stützteil 3 ist etwa in seiner Mitte, d. h. an seiner tiefsten Stelle, mit einem kugelförmigen Sicherungskörper 9 versehen, der teilweise in das Stützteil 3 eingelagert ist. Das gegenüber der Aussparung 5 herausragende Teil des Sicherungskörpers 9 ist ein Kugelsegment und bildet einen ersten Vorsprung 10.

Der Achskörper 1 ist im Bereich des Vorsprungs 10 mit einer Vertiefung 11 versehen. Die Vertiefung 11 kann vorzugsweise dadurch erzielt werden, dass der Achskörper 1 lokal erhitzt wird und ein Druckkörper (nicht dargestellt) in den Achskörper 1 eingepresst wird, wobei der Druckkörper eine Form aufweist, die der Form des ersten Vorsprungs 10 entspricht.

Wenn sich der Sicherungskörper 9 beim Betrieb immer passgenau in der Vertiefung 11 des Achskörpers 1 befindet, ist eine gute Sicherung für den Achskörper 1 gewährleistet.

Der Tragarm 2 ist unterhalb des Sicherungskörpers 9 mit einer Aussparung 12 versehen. An der dem Tragarm 2 zugewandten Seite des Stützteils 3 ragt ein Teil des kugelförmigen Sicherungskörpers 9 nach unten heraus. Dieser Teil bildet einen zweiten Vorsprungs 13, der in die Aussparung im Tragarm 2 aufgenommen werden kann. Der zweite Vorsprung 13 dient bei der Montage der Verbindung zwischen Achskörper 1 und Tragarm 2 als ein Positionierungsnocken zum Positionieren des Stützteils 3 auf dem Tragarm 2. Weiter ist das Stützteil 3 in montiertem Zustand gegenüber dem Tragarm 2 durch den zweiten Vorsprungs 13 gesichert, der in die Aussparung 12 im Tragarm 2 hineinragt.

Bei einer weiteren nicht dargestellten Ausbildung ist das Stützteil an der Unterseite des Tragarms angeordnet; der Achskörper befindet sich unter dem Tragarm. Für diese nicht dargestellte Ausbildung gilt im Wesentlichen die gleiche Beschreibung wie die vorangehende, mutatis mutandis.

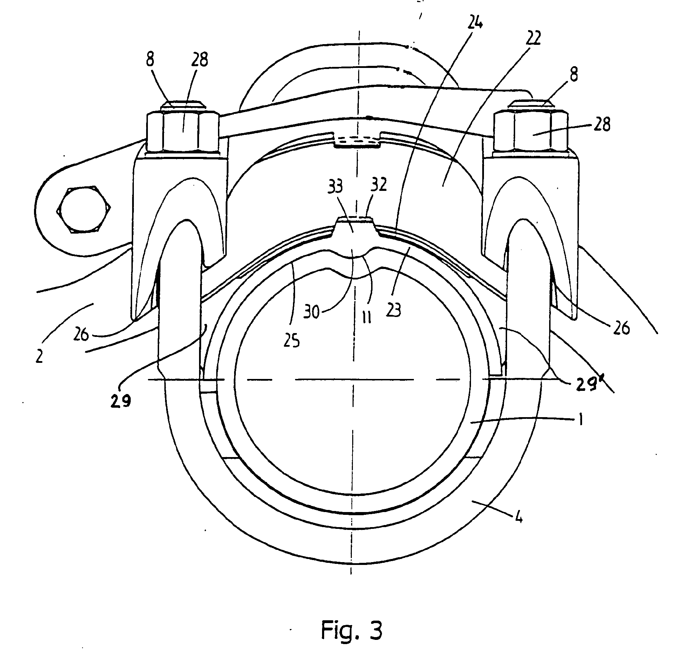

In Figur 3 ist ein Ausführungsbeispiel einer erfindungsgemäßen Verbindung dargestellt, bei der der Tragarm 2' einen gekrümmten Teil 22 aufweist. Der konkave Bereich 24 des gekrümmten Teils 22 liegt bei der dargestellten Ausbildung unten. In dem konkaven Bereich 24 ist ein halbzylindrisches Stützteil 23 angeordnet. Der Achskörper 1 befindet sich in dieser Ausbildung somit unter dem Tragarm 2. Das Stützteil 23 ist an der dem Tragarm 2 zugewandten Seite ausgelegt, um passgenau in die Form des konkaven Bereichs 24 aufgenommen zu werden. Die dem Achskörper 1 zugewandte Seite des Stützteil 23 bildet die Aussparung 25, um in dieser einen Teil des Achskörpers 1 aufzunehmen. Es sei darauf hingewiesen, dass auch eine Ausbildung möglich ist, bei der der konkave Bereich nach oben gedreht ist und der Achskörper 1 sich über dem Tragarm 2 befindet.

Die Schenkel 26 von Briden 4 werden seitlich am Tragarm 2 vorbeigeführt und in einer unter dem Tragarm 2 angeordneten Klemmplatte 15 mit Löchern eingesteckt. Die Schenkel 26 der Briden 4 sind jeweils an ihrem Ende mit einem Gewindeteil 8 versehen, auf das entsprechende Muttern 28 aufgedreht werden, mit denen die Briden und damit die Verbindung festgezogen werden können.

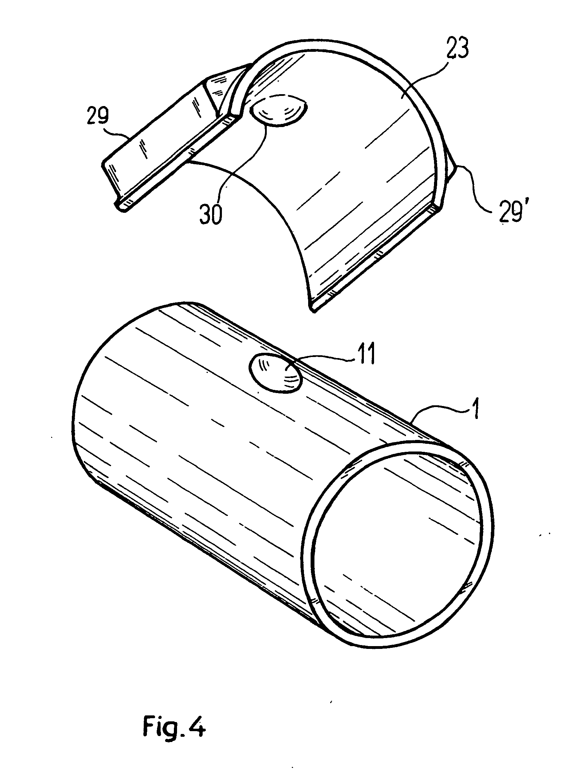

In der Aussparung 25 des Stützteils 23 ist ein erster Vorsprung 30 ausgebildet. Dieser Vorsprung 30 ist in dem zweiten Ausführungsbeispiel im Wesentlichen als ein Kugelsegment ausgebildet. Andere Formen sind möglich. Der Achskörper 1 wiederum ist mit einer Vertiefung 11 versehen, die im wesentlichen komplementär zu dem ersten Vorsprung 30 ist. Die Vertiefung 11 ist, wie bereits anhand des ersten Ausführungsbeispieles beschrieben worden ist, mittels plastischer Verformung hergestellt worden. Der erste Vorsprung 30 ist in montiertem Zustand in der Vertiefung 11 aufgenommen, wodurch der Achskörper 1 gegen unerwünschtes Rotieren oder Verrutschen um die Mittelachse gesichert ist, (vgl. insbesondere Figur 4).

Das Stützteil 23 hat die Form einer zylindrischen Halbschale. Da der Achskörper 1 und die Unterseite des Tragarms 2 (Fig. 3) nicht dieselbe Krümmung haben, wird hier mit dem Stützteil 23 ein Ausgleich geschaffen insbesondere dadurch, dass das Stützteil mit zwei Nasen 29, 29' an seiner Oberseite versehen ist, die den auszugleichenden Bereich zwischen Achsrohr 1 und Tragarm 2 ausfüllen. Die Nasen 29, 29' unterstützen die stabilisierende Wirkung der Vorsprünge wesentlich und verhindern darüber hinaus ein Einbiegen des Tragarms unter großer Last, da die Last- und Druckverteilung auf das Achsrohr vergleichmäßigt ist.

Weiterhin ist auch der Tragarm 2 im dargestellten gekrümmten Teil 22 mit einer Aussparung 32 versehen. An dem Stützteil 23 ist an der dem Tragarm zugewandten Seite ein zweiter Vorsprung 33 angeformt, der die Form eines durch eine Sekante abgeschnittenen Kugelsegments aufweist. In montiertem Zustand ist der zweite Vorsprung 33 mindestens teilweise in der Aussparung 32 im Tragarm 2 aufgenommen.

In den beschriebenen Ausführungsbeispielen hat der erste Vorsprung 10 bzw. 30 die Form eines Kugelsegments, und die Vertiefung 11 im Achskörper ist komplementär dazu gebildet. Der Vorteil einer Anwendung der Kugelform liegt darin, dass bei der Vertiefung 11 im Achskörper 1 ein allmählicher Übergang in dem Achsumfang ohne scharfe Ränder entsteht, wodurch Spannungen im Achskörper 1 an der Stelle der Vertiefung 11 vermieden werden. Es ist aber auch möglich, eine andere überstehende Form für den ersten Vorsprung 10 bzw. 30 zu wählen, wenn die AufnahmeVertiefung 11 den Achskörper nicht zu sehr schwächt.

## Patentansprüche

1. Fahrzeugachsenelement mit einem Achskörper (1) eines Fahrzeugs und einem den Achskörper kreuzenden und mit diesem verbundenen Tragarm (2;2'), umfassend ein zwischen dem Achskörper (1) und dem Tragarm (2) angeordnetes Stützteil (3) mit einer Aussparung (5;25), in die ein Teil des Achskörpers (1)aufgenommen ist, und weiter umfassend Klemmmittel (4), mit denen das Stützteil und das in dieses aufgenommene Teil des Achskörpers an dem Tragarm befestigt sind, wobei der Achskörper (1) in montiertem Zustand infolge einer von den Klemmmitteln gelieferten Klemmkraft an das Stützteil (3) gepresst ist und der Achskörper (1) mit einer Vertiefung (11) und das Stützteil in seiner Aussparung (5) mit einem ersten Vorsprung (10; 30) versehen ist, der in montiertem Zustand mindestens teilweise in der Vertiefung (11) des Achskörpers (1) aufgenommen ist, **dadurch gekennzeichnet, dass** das Stützteil (3) an der dem Tragarm (2) zugewandten Seite mit einem zweiten Vorsprung (13; 33) versehen ist, der in montiertem Zustand mindestens teilweise in die Aussparung (12; 32) im Tragarm (2) aufgenommen ist.

2. Fahrzeugachsenelement nach Anspruch 1, **dadurch gekennzeichnet, dass** der erste Vorsprung (10) und der zweite Vorsprung (13) sich in einem einzigen Sicherungskörper (9) verkörpern.

3. Fahrzeugachsenelement nach Anspruch 2,**dadurch gekennzeichnet, dass** der Sicherungskörper (9) kugelförmig ist.

4. Fahrzeugachsenelement nach Anspruch 1 oder 2, **dadurch gekennzeichnet, dass** der erste Vorsprung (10; 30) an der tiefsten bzw. höchsten Stelle der Aussparung (5; 25) angeordnet ist.

5. Fahrzeugachsenelement nach Anspruch 1 oder 2, **dadurch gekennzeichnet, dass** der erste Vorsprung (30) im wesentlichen als Kugelsegment ausgebildet ist.

6. Fahrzeugachsenelement nach Anspruch 1 bis 5, **dadurch gekennzeichnet, dass** der Achskörper (1) als ein im wesentlichen rundes Rohr ausgeführt ist, in den die Vertiefung (11) mittels plastischer Verformung eingebracht ist.

7. Fahrzeugachsenelement nach einem der vorangehenden Ansprüche, **dadurch gekennzeichnet, dass** der Tragarm (2) im Kreuzungsbereich zum Achskörper im wesentlichen gerade ist.

8. Fahrzeugachsenelement nach einem der vorangehenden Ansprüche, **dadurch gekennzeichnet, dass** der Tragarm (2') im Kreuzungsbereich zum Achskörper einen gekrümmten Teil aufweist.

## Claims

1. Vehicle axle element with an axle body (1) of a vehicle and a bearing arm (2; 2') crossing the axle body and connected thereto, comprising a supporting part (3) arranged between the axle body (1) and the bearing arm (2) with a recess (5; 25) in which a part of the axle body (1) is received, and further comprising clamping means (4) with which the supporting part and the part of the axle body received therein are fixed to the bearing arm, wherein the axle body (1) is pressed against the supporting part (3) in the assembled state due to a clamping force supplied by the clamping means and the axle body (1) is provided with a depression (11) and the supporting part in its recess (5) with a first projection (10; 30) which in the assembled state is at least partially received in the depression (11) of the axle body (1), **characterised in that** the supporting part (3) is provided on the side facing the bearing arm (2) with a second projection (13; 33) which in the assembled state is at least partially received in the recess (12; 32) in the bearing arm (2).

2. Vehicle axle element according to claim 1,
**characterised in that** the first projection (10) and the second projection (13) are embodied in a single securing body (9).

3. Vehicle axle element according to claim 2,
**characterised in that** the securing body (9) is spherical.

4. Vehicle axle element according to claim 1 or 2, **characterised in that** the first projection (10; 30) is arranged at the lowest / highest point of the recess (5; 25).

5. Vehicle axle element according to claim 1 or 2, **characterised in that** the first projection (30) is substantially formed as a ball segment.

6. Vehicle axle element according to claims 1 to 5, **characterised in that** the axle body (1) is designed as a substantially round tube, in which the depression (11) is introduced by means of plastic deformation.

7. Vehicle axle element according to one of the preceding claims, **characterised in that** the bearing arm (2) is substantially straight in the crossing region with the axle body.

8. Vehicle axle element according to one of the preceding claims, **characterised in that** the bearing arm (2') comprises a curved part in the crossing region with the axle body.

## Revendications

1. Elément d'essieu de véhicule composé d'un corps d'essieu (1) et d'un bras porteur (2, 2') connecté au corps d'essieu et croisant celui-ci, comprenant un support (3) disposé entre le corps d'essieu (1) et le bras porteur (2), ce support (3) comportant une cavité (5, 25) dans laquelle est logée une partie du corps d'essieu (1) ; ledit élément d'essieu de véhicule comprenant, en outre, des moyens de serrage (4) par le biais desquels le support et la partie du corps d'essieu logé dans celui-ci sont fixés au bras porteur, le corps d'essieu (1) étant, à l'état monté, bloqué contre le support (3) sous l'effet de la force des moyens de serrage ; le corps d'essieu (1) comportant un creux (11) et le support comportant dans sa cavité (5) une première saillie (10, 30) qui, à l'état monté, est au moins en partie engagée dans le creux (11) du corps d'essieu (1), **caractérisé en ce que** le support (3) comporte, sur son côté orienté vers le bras porteur (2), une deuxième saillie (13, 33) qui, à l'état monté, est au moins en partie engagée dans la cavité (12, 32) du bras porteur (2).

2. Elément d'essieu de véhicule selon la revendication 1, **caractérisé en ce que** la première saillie (10) et la deuxième saillie (13) constituent un seul corps de sécurité (9).

3. Elément d'essieu de véhicule selon la revendication 2, **caractérisé en ce que** le corps de sécurité (9) est en forme de sphère.

4. Elément d'essieu de véhicule selon la revendication 1 ou 2, **caractérisé en ce que** la première saillie (10, 30) est disposée au point le plus bas ou le plus haut de la cavité (5, 25).

5. Elément d'essieu de véhicule selon la revendication 1 ou 2, **caractérisé en ce que** la première saillie (30) est sensiblement en forme de segment de sphère.

6. Elément d'essieu de véhicule selon l'une quelconque des revendications 1 à 5, **caractérisé en ce que** le corps d'essieu (1) est un tube sensiblement rond dans lequel le creux (11) a été pratiqué par déformation plastique.

7. Elément d'essieu de véhicule selon l'une quelconque des revendications précédentes, **caractérisé en ce que** dans la zone de croisement avec le corps d'essieu (1), le bras porteur (2) est sensiblement droit.

8. Elément d'essieu de véhicule selon l'une quelconque des revendications précédentes, **caractérisé en ce que** dans la zone de croisement avec le corps d'essieu, le bras porteur (2') comporte une partie courbe.
